# EUROPÄISCHE PATENTANMELDUNG

(11) **EP 4 813 761 A1**
(43) Veröffentlichungstag der Anmeldung: **30.09.2026**
(21) Anmeldenummer: 25166079.1
(22) Anmeldetag: 25.03.2025
(51) Int. Cl.: B60R 21/13, B62D 33/06, B66F 9/06, B66F 9/075

(54) **MITNAHMESTAPLER**

(71) Anmelder: Palfinger AG, 5101 Bergheim bei Salzburg (AT)
(72) Erfinder: LECHNER, Michael, 5101 Bergheim bei Salzburg (AT); HASLAUER, Mario, 5101 Bergheim bei Salzburg (AT)
(74) Vertreter: Torggler & Hofmann Patentanwälte - Innsbruck

(57) **Zusammenfassung**

Mitnahmestapler, mit einer Fahrerkabine (1) und einer Überrollschutzvorrichtung, wobei die Überrollschutzvorrichtung wenigstens aufweist:
- einen Überrollbügel (2), welcher zwischen einer Transportposition und einer Gebrauchsposition bewegbar ist
- eine oberhalb des Überrollbügels (2) angeordnete Rahmenkonstruktion (3), welche zwischen einer Transportposition und einer Gebrauchsposition bewegbar ist
wobei eine mechanische Synchronisationsvorrichtung (4) vorgesehen ist, durch welche eine Bewegung des Überrollbügels (2) zwischen der Transportposition und der Gebrauchsposition eine Bewegung der Rahmenkonstruktion (3) zwischen der Transportposition und der Gebrauchsposition bewirkt.

## Beschreibung

Die Offenbarung betrifft einen Mitnahmestapler mit den Merkmalen des Oberbegriffs des Anspruchs 1.

Solche Mitnahmestapler können an einer Rückseite eines Straßenfahrzeuges (wie z. B. einem LKW) für den Transport angeordnet werden und dürfen daher beim Transport nicht über einen vorgegebenen Abstand über die Rückseite des Straßenfahrzeuges vorstehen.

Zum Schutz einer sich im Mitnahmestapler während eines Gebrauchs befindenden Person ist eine Überrollschutzvorrichtung vorgesehen, welche einen Überrollbügel und eine oberhalb dieser angeordneten Rahmenkonstruktion umfasst. Überrollbügel und Rahmenkonstruktion müssen bisher einzeln für den Transport in eine Transportposition bewegt werden und vor einem Gebrauch des Mitnahmestaplers in eine Gebrauchsposition bewegt werden.

Werden Überrollbügel oder Rahmenkonstruktion nicht ordnungsgemäß bewegt, gefährdet dies entweder die sich im Mitnahmestapler während des Gebrauchs befindende Person oder führt zu einer unerlaubt großen Fahrzeuglänge in der Transportposition.

Es ist eine Aufgabe, einen Mitnahmestapler bereitzustellen, bei welchem die Gefahr eines nicht ordnungsgemäßen Gebrauchs oder eines nicht ordnungsgemäßen Transports verringert sind.

Diese Aufgabe wird gelöst durch einen Mitnahmestapler mit den Merkmalen des Anspruchs 1.

Ein solcher Mitnahmestapler weist eine Fahrerkabine und eine Überrollschutzvorrichtung auf, wobei die Überrollschutzvorrichtung wenigstens aufweist:
- einen Überrollbügel, welcher zwischen einer Transportposition und einer Gebrauchsposition bewegbar ist
- eine oberhalb des Überrollbügels angeordnete Rahmenkonstruktion, welche zwischen einer Transportposition und einer Gebrauchsposition bewegbar ist

Es ist eine mechanische Synchronisationsvorrichtung vorgesehen, durch welche eine Bewegung des Überrollbügels zwischen der Transportposition und der Gebrauchsposition eine Bewegung der Rahmenkonstruktion zwischen der Transportposition und der Gebrauchsposition bewirkt. So genügt es, nur den Überrollbügel in die korrekte Position zu bewegen und die Rahmenkonstruktion wird automatisch mitbewegt, was die Gefahr eines nicht ordnungsgemäßen Gebrauchs oder eines nicht ordnungsgemäßen Transports verringert.

Vorteilhafte Ausführungsformen sind in den abhängigen Ansprüchen definiert.

Bei einer Ausführungsform ist vorgesehen, dass die Synchronisationsvorrichtung in Form einer Stange ausgebildet ist, welche in einem Bereich eines ersten Endes gelenkig mit dem Überrollbügel verbunden ist und in einem Bereich eines zweiten Endes gelenkig mit der Rahmenkonstruktion verbunden ist. Andere Ausbildungen der Synchronisationsvorrichtung sind möglich.

Bei einer Ausführungsform ist vorgesehen, dass an der Rahmenkonstruktion ein Witterungsschutz angeordnet ist.

Bei einer Ausführungsform ist vorgesehen, dass in der Fahrerkabine ein Sitz klappbar und/oder drehbar zwischen einer Transportposition und einer Gebrauchsposition angeordnet ist.

Bei einer solchen Ausführungsform kann vorgesehen sein, dass der Überrollbügel in der Gebrauchsposition in Höhe einer Rückenlehne des Sitzes angeordnet ist, wenn sich dieser in der Gebrauchsposition befindet.

Bei einer Ausführungsform nach einem der beiden vorangehenden Absätze kann vorgesehen sein, dass sich die Rahmenkonstruktion in Gebrauchsposition wenigstens bis zu einer Rückseite der Rückenlehne des Sitzes erstreckt, wenn sich dieser in der Gebrauchsposition befindet.

Bei einer Ausführungsform ist vorgesehen, dass die Fahrerkabine wenigstens zwei Vertikalstreben aufweist, an welchen der Überrollbügel und/oder die Rahmenkonstruktion gelenkig befestigt sind bzw. ist.

Bei einer solchen Ausführungsform kann vorgesehen sein, dass der Überrollbügel und/oder die Rahmenkonstruktion in Transportposition an den wenigstens zwei Vertikalstreben anliegen bzw. anliegt.

Bei einer Ausführungsform ist eine lösbare Verriegelungsvorrichtung vorgesehen, welche den Überrollbügel in Transportposition verriegelt, wobei vorzugsweise vorgesehen ist, dass die Verriegelungsvorrichtung durch das Bewegen des Überrollbügels in die Transportposition verriegelbar ist.

Bei einer Ausführungsform ist vorgesehen, dass der Mitnahmestapler wenigstens einen Kraftspeicher aufweist, welcher an dem Überrollbügel oder an der Rahmenkonstruktion angreift und Überrollbügel und Rahmenkonstruktion in Richtung der Gebrauchsposition mit Kraft beaufschlagt. Dabei kann vorgesehen sein, dass der wenigstens eine Kraftspeicher den Überrollbügel und die Rahmenkonstruktion mit einer solchen Kraft beaufschlagt, dass nach einem Lösen der Verriegelungsvorrichtung der Überrollbügel und die Rahmenkonstruktion durch die Kraft des wenigstens einen Kraftspeichers aus der Transportposition bis in die Gebrauchsposition bewegbar sind.

Ausführungsformen werden anhand der Figuren diskutiert.

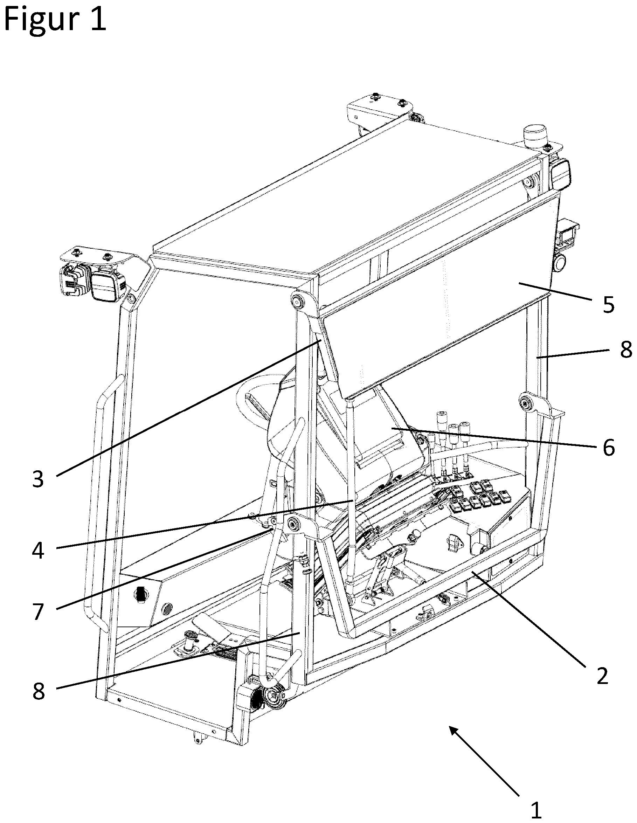

Figur 1 zeigt eine Fahrerkabine eines Mitnahmestaplers mit Überrollbügel und Rahmenkonstruktion in Transportposition.

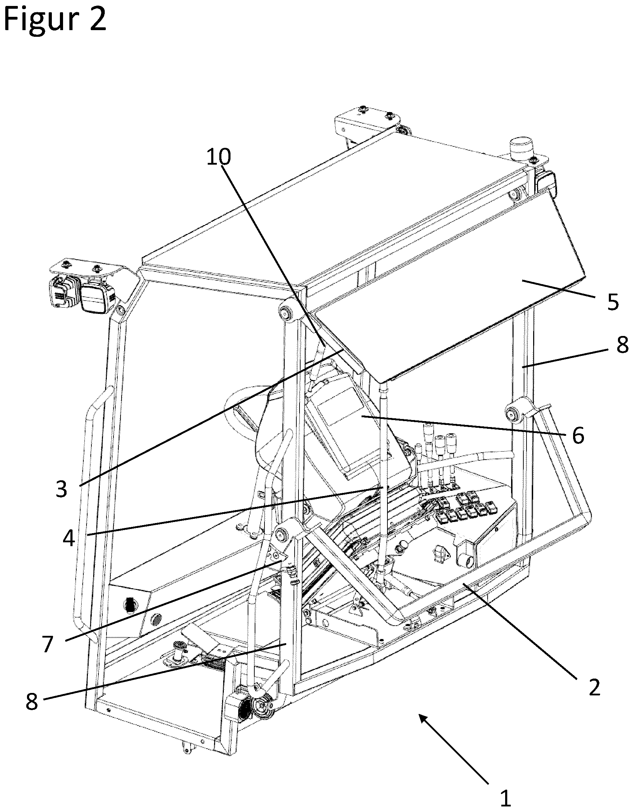

Figur 2 zeigt die Fahrerkabine der Figur 1 mit Überrollbügel und Rahmenkonstruktion in einer Position zwischen Transportposition und Gebrauchsposition.

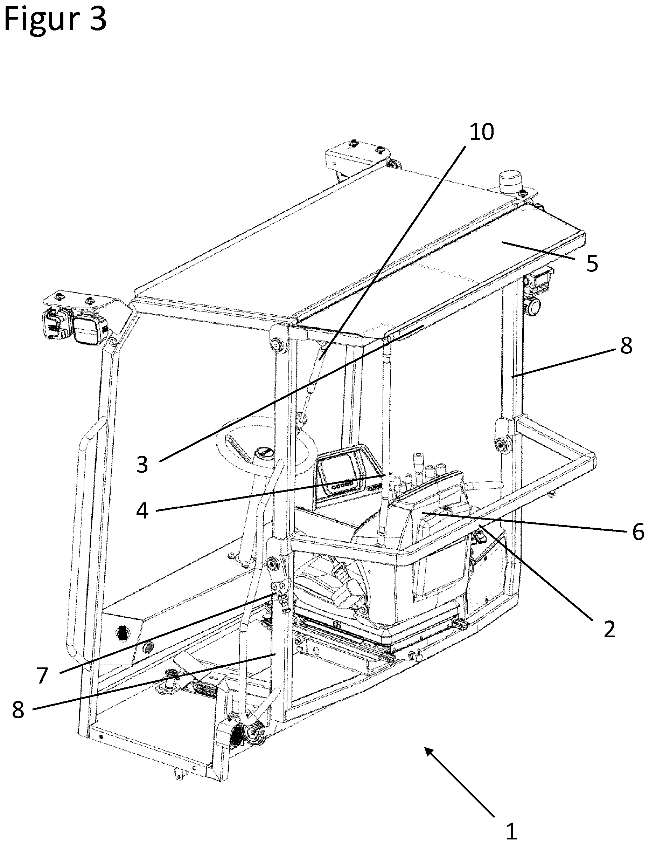

Figur 3 zeigt die Fahrerkabine der Figuren 1 und 2 mit Überrollbügel und Rahmenkonstruktion in Gebrauchsposition.
Figur 4A, 4B zeigen in einer Detaildarstellung einer mögliche Verriegelungsvorrichtung für die Transportposition.
Figur 5A, 5B zeigen in einer Detaildarstellung eine weitere mögliche Verriegelungsvorrichtung für die Gebrauchslage.
Figur 6 zeigt den Mitnahmestapler.

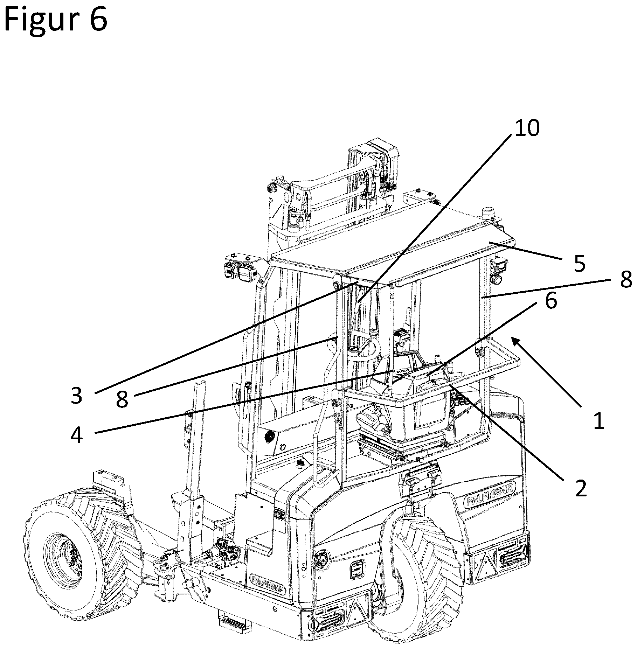

Der Mitnahmestapler (vgl. Figur 6) weist eine Fahrerkabine 1 und eine Überrollschutzvorrichtung auf, wobei die Überrollschutzvorrichtung einen Überrollbügel 2, welcher zwischen einer Transportposition und einer Gebrauchsposition bewegbar ist und eine oberhalb des Überrollbügels 2 angeordnete Rahmenkonstruktion 3, welche zwischen einer Transportposition und einer Gebrauchsposition bewegbar ist, aufweist.

Es ist eine mechanische Synchronisationsvorrichtung 4 vorgesehen, durch welche eine Bewegung des Überrollbügels 2 zwischen der Transportposition und der Gebrauchsposition eine Bewegung der Rahmenkonstruktion 3 zwischen der Transportposition und der Gebrauchsposition bewirkt.

Im gezeigten Ausführungsbeispiel ist die Synchronisationsvorrichtung 4 in Form einer Stange ausgebildet, welche in einem Bereich eines ersten Endes gelenkig mit dem Überrollbügel 2 verbunden ist und in einem Bereich eines zweiten Endes gelenkig mit der Rahmenkonstruktion 3 verbunden ist. Andere Formen der mechanischen Synchronisationsvorrichtung 4 wären denkbar, wie z. B. Profile, Rohre, Bleche usw.

An der Rahmenkonstruktion 3 ist ein optionaler Witterungsschutz 5 angeordnet.

Im gezeigten Ausführungsbeispiel ist in der Fahrerkabine 1 ein vorzugsweise drehbarer Sitz 6 klappbar zwischen einer Transportposition und einer Gebrauchsposition angeordnet.

Der Überrollbügel 2 ist in der Gebrauchsposition in Höhe einer Rückenlehne des Sitzes 6 angeordnet.

Die Rahmenkonstruktion 3 erstreckt sich in Gebrauchsposition über eine Rückseite der Rückenlehne des Sitzes 6 hinaus.

Die Fahrerkabine 1 weist in diesem Ausführungsbeispiel zwei hintere Vertikalstreben 8 auf, an welchen der Überrollbügel 2 und die Rahmenkonstruktion 3 gelenkig befestigt sind.

In der Transportposition liegen Überrollbügel 2 und Rahmenkonstruktion 3 an den zwei hinteren Vertikalstreben 8 an.

Es ist eine lösbare Verriegelungsvorrichtung 9 vorgesehen, welche den Überrollbügel 2 in Mitnahmeposition verriegelt, wobei die Verriegelungsvorrichtung 9 durch das Bewegen des Überrollbügels 2 in die Transportposition verriegelbar ist.

Der Mitnahmestapler weist einen optionalen Kraftspeicher 10 auf, welcher an dem Überrollbügel 2 oder an der Rahmenkonstruktion 3 angreift und den Überrollbügel 2 und die Rahmenkonstruktion 3 in Richtung der Gebrauchsposition mit Kraft beaufschlagt. Nach einem Lösen der Verriegelungsvorrichtung werden der Überrollbügel 2 und die Rahmenkonstruktion 3 durch die Kraft des Kraftspeichers 10 aus der Transportposition bis in die Gebrauchsposition bewegt.

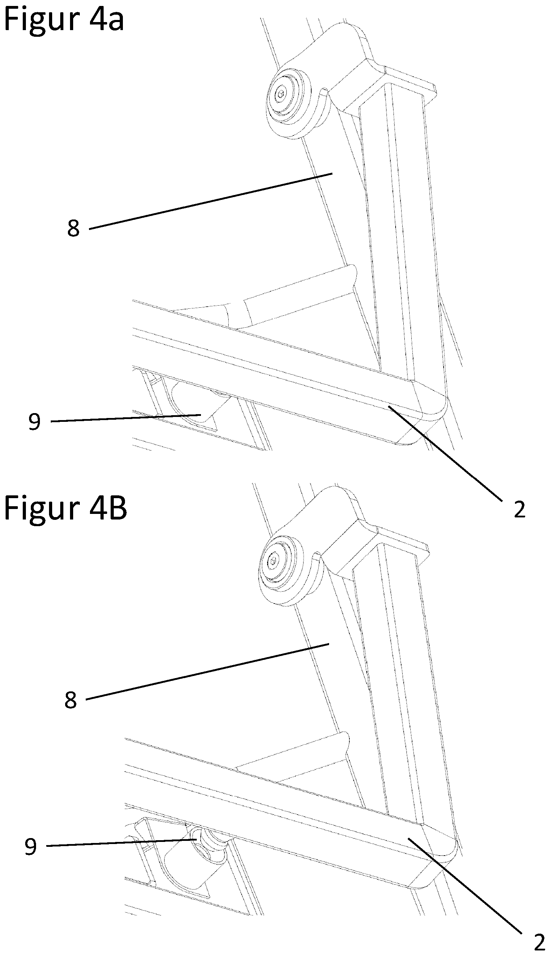

Die Verriegelungsvorrichtung 9 der Figuren 4A, 4B ist selbstverriegelnd beim Bewegen in die Transportposition. Sie weist einen Zapfen auf, der für das Verriegeln in eine Hülse bewegt wird und dort kraftschlüssig hält. Beim Bewegen des Überrollbügels 2 aus der Transportposition wird der Zapfen aus der Hülse herausbewegt.

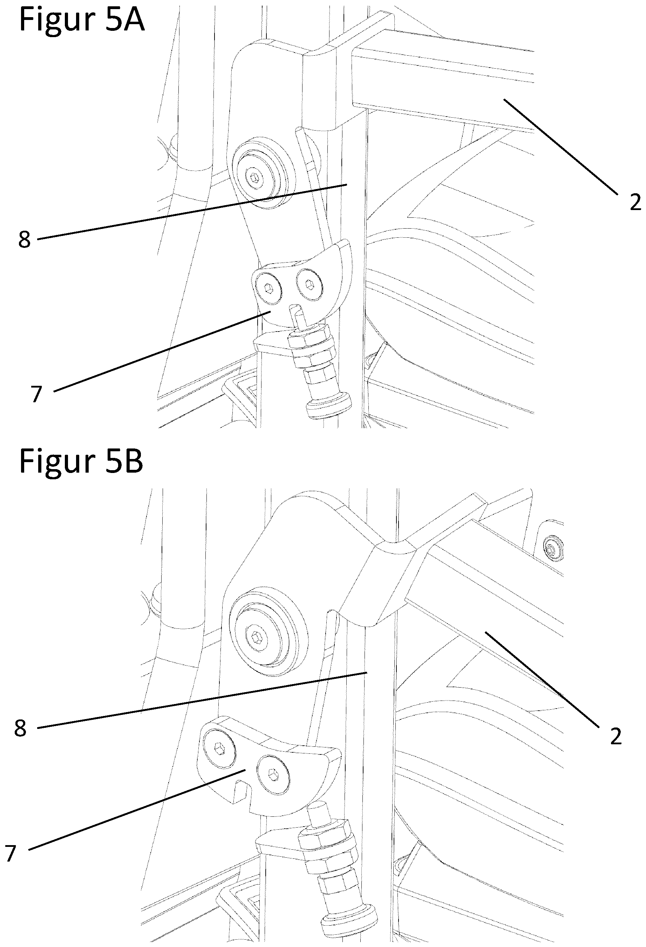

Die Verriegelungsvorrichtung 7 der Figuren 5A, 5B ist selbstverriegelnd beim Bewegen in die Gebrauchsposition und kann mechanische Einflüsse der Überrollschutzvorrichtung aufnehmen. Der Bediener muss zum Bewegen in die Transportstellung den Mechanismus dieser Verriegelungsvorrichtung 7 manuell entriegeln. Die Verriegelungsvorrichtung 7 weist einen gemeinsam mit dem Überrollbügel 2 schwenkbaren Teil mit einer Ausnehmung auf, in welche in Gebrauchsposition ein gefederter Bolzen zum Verriegeln einfährt und dort formschlüssig hält. Zum Entriegeln muss der Bolzen manuell aus der Ausnehmung herausbewegt werden.

### Bezugszeichen:

- 1: Fahrerkabine
- 2: Überrollbügel
- 3: Rahmenkonstruktion
- 4: mechanische Synchronisationsvorrichtung
- 5: Witterungsschutz an Rahmenkonstruktion
- 6: Sitz
- 7: Verriegelungsvorrichtung für Gebrauchsposition
- 8: Vertikalstrebe
- 9: Verriegelungsvorrichtung für Transportposition
- 10: Kraftspeicher

## Patentansprüche

1. Mitnahmestapler, mit einer Fahrerkabine (1) und einer Überrollschutzvorrichtung, wobei die Überrollschutzvorrichtung wenigstens aufweist:
- einen Überrollbügel (2), welcher zwischen einer Transportposition und einer Gebrauchsposition bewegbar ist
- eine oberhalb des Überrollbügels (2) angeordnete Rahmenkonstruktion (3), welche zwischen einer Transportposition und einer Gebrauchsposition bewegbar ist
**dadurch gekennzeichnet, dass**
eine mechanische Synchronisationsvorrichtung (4) vorgesehen ist, durch welche eine Bewegung des Überrollbügels (2) zwischen der Transportposition und der Gebrauchsposition eine Bewegung der Rahmenkonstruktion (3) zwischen der Transportposition und der Gebrauchsposition bewirkt.

2. Mitnahmestapler nach dem vorangehenden Anspruch, wobei die Synchronisationsvorrichtung (4) in Form einer Stange ausgebildet ist, welche in einem Bereich eines ersten Endes gelenkig mit dem Überrollbügel (2) verbunden ist und in einem Bereich eines zweiten Endes gelenkig mit der Rahmenkonstruktion (3) verbunden ist.

3. Mitnahmestapler nach einem der beiden vorangehenden Ansprüche, wobei an der Rahmenkonstruktion (3) ein Witterungsschutz (5) angeordnet ist.

4. Mitnahmestapler nach wenigstens einem der vorangehenden Ansprüche, wobei in der Fahrerkabine (1) ein Sitz (6) klappbar und/oder drehbar zwischen einer Transportposition und einer Gebrauchsposition angeordnet ist.

5. Mitnahmestapler nach dem vorangehenden Anspruch, wobei der Überrollbügel (2) in der Gebrauchsposition in Höhe einer Rückenlehne des Sitzes (6) angeordnet ist, wenn sich dieser in der Gebrauchsposition befindet.

6. Mitnahmestapler nach einem der beiden vorangehenden Ansprüche, wobei sich die Rahmenkonstruktion (3) in Gebrauchsposition wenigstens bis zu einer Rückseite der Rückenlehne des Sitzes (6) erstreckt, wenn sich dieser in der Gebrauchsposition befindet.

7. Mitnahmestapler nach wenigstens einem der vorangehenden Ansprüche, wobei die Fahrerkabine (1) wenigstens zwei Vertikalstreben (8) aufweist, an welchen der Überrollbügel (2) und/oder die Rahmenkonstruktion (3) gelenkig befestigt sind bzw. ist.

8. Mitnahmestapler nach dem vorangehenden Anspruch, wobei der Überrollbügel (2) und/oder die Rahmenkonstruktion (3) in Transportposition an den wenigstens zwei Vertikalstreben (8) anliegen bzw. anliegt.

9. Mitnahmestapler nach wenigstens einem der vorangehenden Ansprüche, wobei eine lösbare Verriegelungsvorrichtung (9) vorgesehen ist, welche den Überrollbügel (2) in Transportposition verriegelt.

10. Mitnahmestapler nach dem vorangehenden Anspruch, wobei vorgesehen ist, dass die Verriegelungsvorrichtung (9) durch das Bewegen des Überrollbügels (2) in die Transportposition verriegelbar ist.

11. Mitnahmestapler nach wenigstens einem der vorangehenden Ansprüche, wobei eine lösbare Verriegelungsvorrichtung (7) vorgesehen ist, welche den Überrollbügel (2) in Transportposition verriegelt.

12. Mitnahmestapler nach dem vorangehenden Anspruch, wobei vorgesehen ist, dass die Verriegelungsvorrichtung (7) durch das Bewegen des Überrollbügels (2) in die Gebrauchsposition verriegelbar ist.

13. Mitnahmestapler nach wenigstens einem der vorangehenden Ansprüche, wobei der Mitnahmestapler wenigstens ein Kraftspeicher (10) aufweist, welcher an dem Überrollbügel (2) oder an der Rahmenkonstruktion (3) angreift und den Überrollbügel (2) und die Rahmenkonstruktion (3) in Richtung der Gebrauchsposition mit Kraft beaufschlagt.

14. Mitnahmestapler nach dem vorangehenden Anspruch, wobei der wenigstens eine Kraftspeicher (10) den Überrollbügel (2) und die Rahmenkonstruktion (3) mit einer solchen Kraft beaufschlagt, dass nach einem Lösen der Verriegelungsvorrichtung (9) der Überrollbügel (2) und die Rahmenkonstruktion (3) durch die Kraft des wenigstens einen Kraftspeichers (10) aus der Transportposition bis in die Gebrauchsposition bewegbar sind.
